# EUROPÄISCHE PATENTSCHRIFT

(11) **EP 1 133 782 B1**
(45) Veröffentlichungstag und Bekanntmachung des Hinweises auf die Patenterteilung: **28.05.2003**
(21) Anmeldenummer: 99963236.7
(22) Anmeldetag: 15.11.1999
(51) Int. Cl.: H01G 9/08

(54) **ALUMINIUM-ELEKTROLYTKONDENSATOR MIT VERRINGERTER INDUKTIVITÄT**
ALUMINIUM ELECTROLYTE CAPACITOR WITH REDUCED INDUCTIVITY
CONDENSATEUR ELECTROLYTIQUE A L'ALUMINIUM A INDUCTIVITE REDUITE

(30) Priorität: 18.11.1998 DE 19853267
(43) Veröffentlichungstag der Anmeldung: 19.09.2001
(73) Patentinhaber: EPCOS AG, 81541 München (DE)
(72) Erfinder: SCHWEIKERT, Wilhelm, D-89522 Heidenheim (DE); WILL, Norbert, D-89522 Heidenheim (DE)
(74) Vertreter: Epping Hermann & Fischer
(86) Internationale Anmeldenummer: DE9903624
(87) Internationale Veröffentlichungsnummer: WO00030134

(56) Entgegenhaltungen:
- EP-A- 0 517 936
- EP-A- 0 598 256
- DE-C- 504 408
- GB-A- 1 489 638
- US-A- 1 513 348
- US-A- 3 648 337
- US-A- 3 753 051

## Beschreibung

Die Erfindung betrifft einen Aluminium-Elektrolytkondensator mit verringerter Induktivität, der in ein Metallgehäuse eingebaut ist, das durch eine mit metallischen Durchführungen versehene Deckscheibe verschlossen ist.

Aluminium-Elektrolytkondensatoren besitzen bei hohen Betriebsfrequenzen aufgrund des induktiven Anteils einen hohen Scheinwiderstand, der die elektrische Funktion des Kondensators in der Schaltung beeinträchtigen kann.

Um den induktiven Anteil im Elektrolytkondensator zu reduzieren, werden in Spezialelektrolytkondensatoren die elektrischen Verbindungen zwischen dem Kondensatorwickel und den elektrischen Durchführungen so ausgelegt, daß die räumliche Entfernung zwischen den beiden Leitungen minimal ist. Damit ist das bei einem Stromfluß entstehende magnetische Feld ebenfalls minimal. Wegen des hohen fertigungstechnischen Aufwandes und den damit verbundenen hohen Kosten, die aus dieser Lösung resultieren, ist dieser technische Weg in großen Rundbecher-Elektrolytkondensatoren wenig verbreitet. Elektrolytkondensatoren mit verringerter Induktivität sind z.B. aus EP 0 517 936 A1 oder JP 05 144 681 A bekannt.

Aufgabe der vorliegenden Erfindung ist es, einen Aluminium-Elektrolytkondensator mit verringerter Induktivität anzugeben, der ohne hohen fertigungstechnischen Aufwand und preisgünstig herzustellen ist.

Diese Aufgabe wird erfindungsgemäß dadurch die in Patentanspruch 1 angegebenen Merkmale gelöst.

Dadurch wird der Vorteil erzielt, daß in den leitenden Körpern durch Gegeninduktion Ströme (Wirbelströme) hervorgerufen werden, die das magnetische Wechselfeld abschwächen. Dadurch wird die Induktivität des Elektrolytkondensators reduziert.

Vorteilhafte Ausgestaltungen des Aluminium-Elektrolytkondensator nach der Erfindung sind in den Unteransprüchen angeführt.

Die Erfindung wird anhand der folgenden Ausführungsbeispiele näher erläutert.

In der dazugehörenden Zeichnung zeigen
- Figur 1: einen Kondensatordeckel mit leitenden Körpern auf der Innenseite und
- Figur 2: einen Kondensatordeckel mit leitenden Körpern auf der Außenseite.

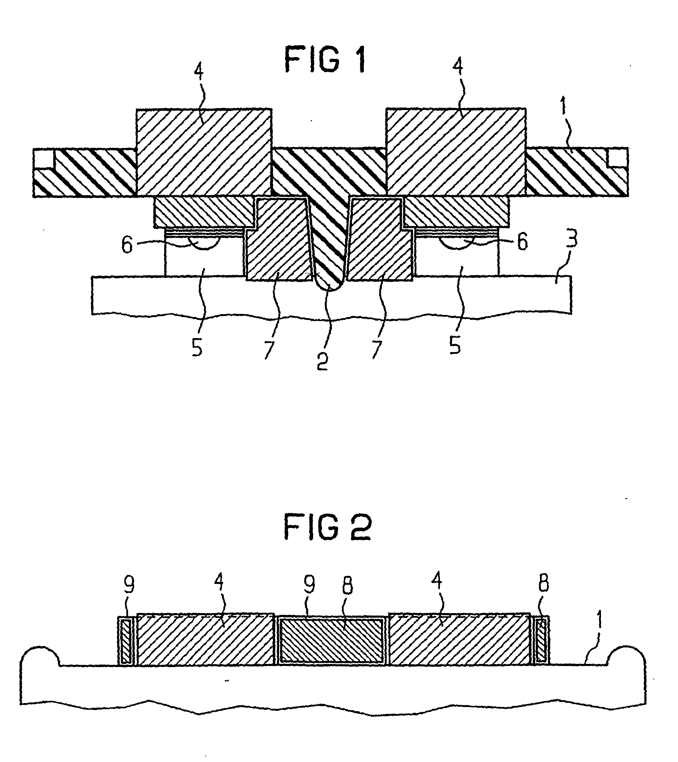

In Figur 1 ist ein Deckel 1 dargestellt, der als Abschlußscheibe ein in der Figur nicht gezeigtes Kondensatorgehäuse verschließt. Der Deckel 1 besteht vorzugsweise aus einem isolierenden Kunststoff und besitzt beispielsweise ein Ansatzstück 2, welches in ein Kernloch des Kondensatorwickels 3 eingeführt wird und somit den Wickel 3 zentriert. Im Deckel 1 sind Durchführungen 4 angeordnet, an die auf der Innenseite die Anschlußbändchen 5 des Kondensatorwickels 3 mittels Nieten 6 befestigt sind.

Die Magnetfelder innerhalb des Elektrolytkondensators zwischen der Deckscheibe 1 und dem Kondensatorwickel 3 sind zwischen den Anschlußbändchen 5 maximal. Deshalb ist dieser Hohlraum mit leitenden Körpern 7 ausgefüllt. Um die Qualität des Elektrolytkondensators nicht zu beeinträchtigen, bestehen diese Körper 7 aus reinem Aluminium. Es ist aber auch möglich, daß die Körper 7 aus einem leitfähigen Kunststoff bestehen, der gegenüber dem Elektrolyten neutral ist. Ferner ist es möglich, die Körper 7 als Hohlkörper auszubilden.

Um die üblichen Deckscheiben 1 nicht ändern zu müssen, sind bei der Ausführungsform nach Figur 1 zunächst nur die zwei Hohlräume neben dem Ansatzstück 2, die den Plus- und Minusbereich des Elektrolytkondensators voneinander trennen, mit leitenden Körpern 7 ausgefüllt. Es ist aber auch möglich, daß leitende Körper auch auf der anderen Seite der Durchführungen 4 angeordnet werden.

Ein anderes Ausführungsbeispiel einer Deckscheibe 1 sieht vor, daß die Hohlräume zwischen den Durchführungen 4 auf der Außenseite ausgefüllt sind. Dies erfolgt durch eine Metallscheibe, deren Oberfläche eine elektrische Isolierung besitzt, so daß keine Kriechströme zwischen den Durchführungen 4 entstehen können. Die Scheibe ist so geformt, daß der Bereich zwischen den Durchführungen 4 fast vollständig ausgefüllt ist.

Eine weitere Verbesserung gemäß dem weiteren Ausführungsbeispiel der Figur 2 wird durch das vollständige Umschließen der Durchführungen 4 oberhalb der Deckscheibe 1 erreicht, weil so auch Wirbelströme ermöglicht werden, die durch die äußere Verdrahtung erzeugt werden, so daß hieraus eine Absenkung der Gesamt-Induktivität resultiert. Auch hier besitzt die Metallscheibe 8 auf ihrer Oberfläche eine elektronische Isolierung 9.

An einem Aluminium-Elektrolytkondensator mit Durchmesser 75 mm und Höhe 145 mm wurden die folgenden Induktivitäten bei 4 MHz gemessen:
ohne Scheibe zwischen den Anschlüssen und ohne leitenden Körper im Elektrolytkondensator 14,0 nH und mit leitendem Körper im Elektrolytkondensator 11,3 nH. Mit einer Scheibe zwischen den Anschlüssen und ohne leitenden Körper im Elektrolytkondensator 12,5 nH und mit leitendem Körper im Elektrolytkondensator 9,5 nH.

Durch Einsatz mindestens eines leitenden Körper zusätzlich zur handelsüblichen Abschlußscheibe 1 kann somit die Induktivität um ein Drittel gesenkt werden. Durch Vergrößerung der leitenden Teile, was durch Integration dieser Metallteile in die Scheibe (als Einlegeteile bei Spritzen der Scheibe) möglich ist, kann die Induktivität weiter abgesenkt werden (< 50 %).

## Patentansprüche

1. Aluminium-Elektrolytkondensator mit verringerter Induktivität, der in ein Metallgehäuse eingebaut ist, das durch eine mit metallischen Durchführungen (4) versehene Deckscheibe (1) verschlossen ist,
**dadurch gekennzeichnet, daß**
unterhalb und/oder oberhalb der Deckscheibe (1), im Bereich von magnetischen Feldern bei Stromfluß, mindestens ein elektrisch leitender Körper (7, 8) elektrisch isoliert zu den Durchführungen (4) angeordnet ist.

2. Aluminium-Elektrolytkondensator nach Anspruch 1,
**dadurch gekennzeichnet, daß**
der elektrisch leitende Körper (7, 8) zwischen den Durchführungen (4) angeordnet ist.

3. Aluminium-Elektrolytkondensator nach Anspruch 1 oder 2,
**dadurch gekennzeichnet, daß**
der elektrisch leitende Körper (7, 8) aus Aluminium oder einem gegenüber dem Betriebselektrolyten neutralen leitfähigen Kunststoff besteht.

4. Aluminium-Elektrolytkondensator nach einem der Ansprüche 1 bis 3,
**dadurch gekennzeichnet, daß**
der elektrisch leitende Körper (7, 8) als Hohlkörper ausgebildet ist.

5. Aluminium-Elektrolytkondensator nach einem der Ansprüche 1 bis 4,
**dadurch gekennzeichnet, daß**
der elektrisch leitende Körper (7) auf der Innenseite der Deckscheibe (1) zwischen den Durchführungen (4) angeordnet ist.

6. Aluminium-Elektrolytkondensator nach einem der Ansprüche 1 bis 5,
**dadurch gekennzeichnet, daß**
zusätzlich auf der Außenseite der Deckscheibe (1) ein elektrisch leitender Körper (8) zwischen den Durchführungen (4) angeordnet ist.

7. Aluminium-Elektrolytkondensator nach Anspruch 6,
**dadurch gekennzeichnet, daß**
der elektrisch leitende Körper (8) aus einer die Durchführungen (4) umschließenden Scheibe besteht.

## Claims

1. Aluminium electrolytic capacitor of reduced inductance, which is fitted in a metal housing which is closed off by a cover plate (1) provided with metallic lead-throughs (4), **characterized in that** least one electrically conductive body (7, 8) is arranged, electrically insulated with respect to the lead-throughs (4), below and/or above the cover plate (1) in the region of magnetic fields when current is flowing.

2. Aluminium electrolytic capacitor according to Claim 1, **characterized in that** the electrically conductive body (7, 8) is arranged between the lead-throughs (4).

3. Aluminium electrolytic capacitor according to Claim 1 or 2, **characterized in that** the electrically conductive body (7, 8) consists of aluminium or a conductive plastic which is neutral with respect to the operating electrolyte.

4. Aluminium electrolytic capacitor according to one of Claims 1 to 3, **characterized in that** the electrically conductive body (7, 8) is designed as a hollow body.

5. Aluminium electrolytic capacitor according to one of Claims 1 to 4, **characterized in that** the electrically conductive body (7) is arranged between the lead-throughs (4) on the inner side of the cover plate (1).

6. Aluminium electrolytic capacitor according to one of Claims 1 to 5, **characterized in that** an electrically conductive body (8) is additionally arranged between the lead-throughs (4) on the outer side of the cover plate (1).

7. Aluminium electrolytic capacitor according to Claim 6, **characterized in that** the electrically conductive body (8) comprises a plate which surrounds the lead-throughs (4).

## Revendications

1. Condensateur électrolytique à l'aluminium à inductance réduite qui est monté dans un boîtier métallique fermé par un couvercle (1) muni de traversées (4) métalliques,
**caractérisé en ce que**
il est prévu en-dessous et/ou au-dessus du couvercle (1) dans la région où se produisent des champs magnétiques lors d'un flux de courant, au moins un corps (7, 8) conducteur de l'électricité, qui est isolé électriquement par rapport aux traversées (4).

2. Condensateur électrolytique à l'aluminium suivant la revendication 1,
**caractérisé en ce que**
le corps (7, 8) conducteur de l'électricité est disposé entre les traversées (4).

3. Condensateur électrolytique à l'aluminium suivant la revendication 1 ou 2,
**caractérisé en ce que**
le corps (7, 8) conducteur de l'électricité est en aluminium ou en une matière plastique conductrice neutre vis à vis de l'électrolyte de fonctionnement.

4. Condensateur électrolytique à l'aluminium suivant l'une des revendications 1 à 3,
**caractérisé en ce que**
le corps (7, 8) conducteur de l'électricité est constitué sous la forme d'un corps creux.

5. Condensateur électrolytique à l'aluminium suivant l'une des revendications 1 à 4,
**caractérisé en ce que**
le corps (7) conducteur de l'électricité est disposé sur la face intérieure du couvercle (1) entre les traversées (4).

6. Condensateur électrolytique à l'aluminium suivant l'une des revendications 1 à 5,
**caractérisé en ce que**
un corps (8) conducteur de l'électricité est disposé en plus sur la face extérieure du couvercle (1) entre les traversées (4).

7. Condensateur électrolytique à l'aluminium suivant la revendication 6,
**caractérisé en ce que**
le corps (8) conducteur de l'électricité est constitué d'un plateau entourant les traversées (4).
